# EUROPÄISCHE PATENTSCHRIFT

(11) **EP 1 712 385 B1**
(45) Veröffentlichungstag und Bekanntmachung des Hinweises auf die Patenterteilung: **31.07.2013**
(21) Anmeldenummer: 06007246.9
(22) Anmeldetag: 06.04.2006
(51) Int. Cl.: B60J 1/17

(54) **Vertikale Führungsschiene mit Befestigungsmitteln**
Vertical guide rail with fixation means
Rail de guidage vertical avec moyens de fixation

(30) Priorität: 11.04.2005 DE 102005016455
(43) Veröffentlichungstag der Anmeldung: 18.10.2006
(73) Patentinhaber: GM Global Technology Operations LLC, Detroit, MI 48265-3000 (US)
(72) Erfinder: Lange, Marcus, 64319 Pfungstadt (DE)
(74) Vertreter: Daniel, Ulrich W.P.

(56) Entgegenhaltungen:
- EP-A1- 1 106 408
- WO-A2-01/30598
- DE-U1- 20 209 718
- FR-A1- 2 783 467
- JP-A- 9 175 170
- JP-U- 62 194 118

## Beschreibung

Die Erfindung betrifft einen Fensterrahmen einer Karosserie eines Kraftfahrzeuges, aufweisend eine vertikale Führungsschiene mit Befestigungsmitteln am oberen und unteren Rahmenabschnitt des Fensterrahmens, welche ein Fenster in einen vorderen und einen hinteren Bereich aufteilt, wobei einer der Bereiche zur Halterung einer nicht verschiebbaren Scheibe vorgesehen ist und welche in einer den oberen Rahmenabschnitt bildenden Karosseriestrebe befestigt ist.

Ein solcher Fensterrahmen mit einer derartigen Führungsschiene mit Befestigungsmitteln ist aus der DE 202 09 718 U1 bekannt. Hierbei haben die Befestigungsmittel eine an der Karosseriestrebe befestigte Klammer. Die Klammer weist einen Widerhaken auf, mit dem sie einen an der Führungsschiene angeformten Halter hintergreift. Die Montage der Führungsschiene erfordert zunächst die Befestigung der Klammer in entsprechenden Ausnehmungen der Karosseriestrebe und anschließend die Einführung der Führungsschiene mit dem Halter in der Klammer. Damit gestaltet sich die Montage der Führungsschiene und der Befestigungsmittel sehr aufwändig. Die Montage sowohl der Klammer als auch der Führungsschiene erfolgt zudem zwangsläufig am Fließband an der Karosseriestrebe, was bei einer Serienfertigung jedoch sehr kostenintensiv ist.

Die japanische Druckschrift JP 62 194 118 U zeigt einen Fensterrahmen mit den Merkmalen des Oberbegriffs von Patentanspruch 1.

Der Erfindung liegt das Problem zugrunde, einen Fensterrahmen der eingangs genannten Art hinsichtlich der Führungsschiene und der Befestigungsmittel so zu gestalten, dass sie besonders einfach zu montieren sind.

Dieses Problem wird erfindungsgemäß dadurch gelöst, dass ein zur Halterung der nicht verschiebbaren Scheibe vorgesehenes Schienenteil der Führungsschiene mit einem Rastelement eine vormontierbare bauliche Einheit bildet, in der das Rastelement gegenüber dem Schienenteil ausgerichtet und in seiner vorgesehenen Lage gehalten ist, und dass das Rastelement in der Karosseriestrebe verrastet ist.

Durch diese Gestaltung lässt sich die Führungsschiene zunächst mit sämtlichen zur Befestigung an der Karosseriestrebe erforderlichen Bauteilen verbinden und anschließend das Rastelement mit der Karosseriestrebe verrasten. Die Verbindung aus Rastelement und Schienenteil ermöglicht eine sehr schnelle Montage der baulichen Einheit am Fließband, da nur ein einziges Bauteil an der Karosseriestrebe befestigt werden muss. Weiterhin weist die Führungsschiene mit den Befestigungsmitteln eine besonders geringe Anzahl von Bauteilen auf, da das Schienenteil und das Rastelement unmittelbar aneinander befestigt werden können.

Zur Vereinfachung der Montage der baulichen Einheit aus Rastelement und Schienenteil trägt es bei, dass das Rastelement ein längliches Verbindungsstück aufweist und dass das Verbindungsstück mit dem Schienenteil verbunden ist.

Zur weiteren Vereinfachung der baulichen Einheit aus Rastelement und Schienenteil trägt es gemäß einer anderen vorteilhaften Weiterbildung der Erfindung bei, wenn die Verbindung des Verbindungsstücks mit dem Schienenteil als Klemmverbindung ausgebildet ist.

Das die Führungsschiene aufweisende Fenster gestaltet sich baulich besonders einfach, wenn das Schienenteil auf seiner der nicht verschiebbaren Scheibe abgewandten Seite eine Führung für eine verschiebbare Scheibe aufweist.

Die bauliche Einheit aus Rastelement und Schienenteil lässt sich gemäß einer anderen vorteilhaften Weiterbildung der Erfindung mit besonders geringem Montageaufwand an der Karosseriestrebe befestigen, wenn das Rastelement eine auf einem Hals angeordnete, radiale Verbreiterung zur Verrasterung in einer Ausnehmung der Karosseriestrebe aufweist, wobei die Ausnehmung der Karosseriestrebe einen der radialen Verbreiterung entsprechenden breiten Abschnitt und einen an dem breiten Abschnitt anschließenden, dem Hals des Rastelementes entsprechenden schmalen Abschnitt hat. Hierdurch wird die bauliche Einheit aus Rastelement und Schienenteil mit der radialen Verbreiterung in den breiten Abschnitt der Ausnehmung eingeführt, bis der Hals in die Höhe der Ausnehmung gelangt. Anschließend lässt sich die bauliche Einheit verschieben bis der Hals in dem schmalen Abschnitt zum Liegen kommt. Die radiale Verbreiterung des Rastelementes wird hierdurch von der Karosseriestrebe hintergriffen.

Die Führungsschiene ist nach der Montage an der Karosseriestrebe zuverlässig befestigt, wenn der Hals des Rastelementes radial federnd gestaltet ist und wenn der schmale Abschnitt der Ausnehmung der Karosseriestrebe einen den Hals des Rastelementes hintergreifenden Haken hat.

Das Rastelement lässt sich gemäß einer anderen vorteilhaften Weiterbildung der Erfindung besonders kostengünstig fertigen, wenn das Rastelement und das Verbindungsstück einstückig aus Kunststoff gefertigt sind.

Der Haken in der Ausnehmung könnte beispielsweise federnd gestaltet sein. Da die Karosseriestrebe jedoch meist aus Metall gefertigt ist, erfordert die federnde Gestaltung des Hakens jedoch einen hohen fertigungstechnischen Aufwand. Das Rastelement lässt sich jedoch gemäß einer anderen vorteilhaften Weiterbildung der Erfindung besonders einfach und kostengünstig fertigen, wenn der Hals des Rastelementes eine U-förmige Ausnehmung aufweist. Hierdurch ermöglicht die U-förmige Ausnehmung eine Federung von Außenflächen des Halses und damit eine einfache Verrasterung in der Ausnehmung der Karosseriestrebe.

Die bauliche Einheit aus Rastelement und Schienenteil lässt sich gemäß einer außerhalb der Erfindung liegenden vorteilhaften Weiterbildung besonders einfach vormontieren, wenn Rastmittel zur Verbindung des Verbindungsstückes mit dem Schienenteil zumindest zwei Rastbolzen aufweisen. Weiterhin sind das Rastelement und das Schienenteil hierdurch zuverlässig gegeneinander ausgerichtet.

Die Führungsschiene gestaltet sich konstruktiv besonders einfach, wenn die Rastbolzen auf dem Verbindungsstück angeordnet sind und radial federnde Rasthaken aufweisen und wenn das Schienenteil den Rastbolzen entsprechende Ausnehmungen hat.

Die Verbindung des Verbindungsstücks mit dem Schienenteil weist gemäß einer anderen vorteilhaften Weiterbildung der Erfindung im montierten Zustand der Führungsschiene eine besonders hohe Stabilität auf, wenn das Verbindungsstück einen Schlitz zur Aufnahme eines Abschnitts des Schienenteils hat.

Die Vormontage des Verbindungsstücks mit dem Schienenteil erfordert gemäß einer anderen vorteilhaften Weiterbildung der Erfindung einen besonders geringen Aufwand, wenn das Schienenteil in dem Verbindungsstück eingeklemmt ist.

Kippkräfte des Schienenteils werden gemäß der Erfindung von dem Verbindungsstück besonders zuverlässig abgestützt, da das Schienenteil eine in Längsrichtung des Verbindungsstücks weisende Ausnehmung aufweist und da das Verbindungsstück einen in die Ausnehmung eindringenden Steg hat.

Die Erfindung lässt verschiedene Ausführungsformen zu. Zur weiteren Verdeutlichung ihres Grundprinzips ist eine davon in der Zeichnung dargestellt und wird nachfolgend beschrieben. In der Zeichnung ist ferner eine zweite Ausführungsform dargestellt und wird nachfolgend beschrieben. Diese Ausführungsform liegt jedoch außerhalb der Erfindung.

Die Zeichnung zeigt in
- Fig. 1: schematisch eine Darstellung eines Karosserieteils mit einem eine Führungsschiene aufweisenden Fenster,
- Fig. 2: perspektivisch eine stark vergrößerte Darstellung der Einzelheit II aus Figur 1,
- Fig. 3: stark vergrößert ein Rastelement der Führungsschiene aus Figur 1,
- Fig. 4: stark vergrößert eine Ansicht von Position IV aus Figur 2 auf die Befestigung der Führungsschiene,
- Fig. 5: eine Schnittdarstellung durch die Führungsschiene entlang der Linie V - V aus Figur 2,
- Fig. 6: einen Teilbereich einer weiteren Ausführungsform der Führungsschiene aus Figur 1,
- Fig. 7: eine Schnittdarstellung durch die Führungsschiene aus Figur 6 entlang der Linie VII - VII,
- Fig. 8: eine perspektivische Darstellung eines Rastelementes der Führungsschiene aus den Figuren 6 und 7.

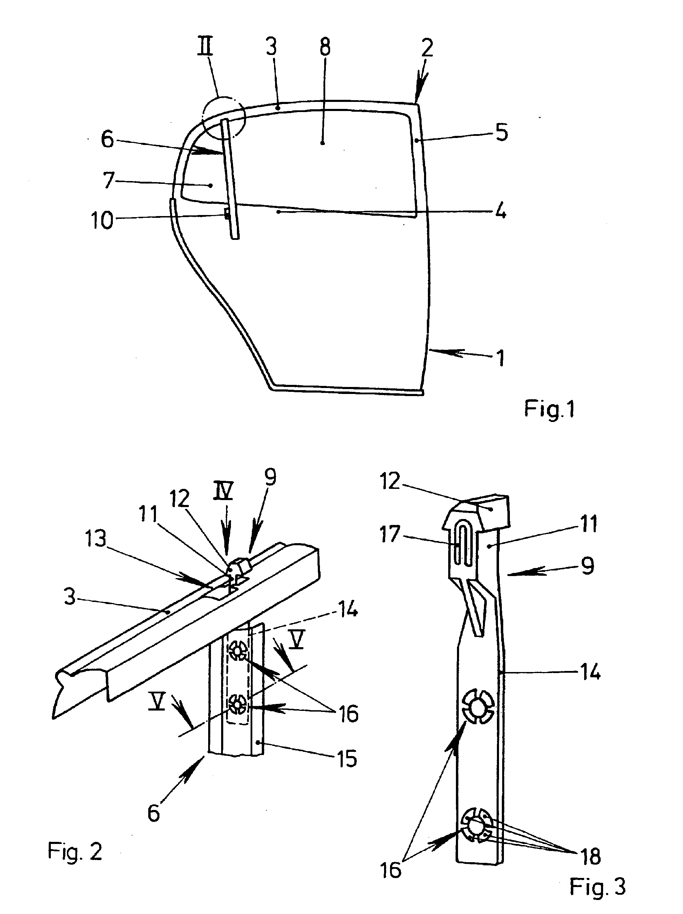

Figur 1 zeigt eine Karosserie eines Kraftfahrzeuges mit einem geschlossenen Wandabschnitt 1, an dem sich nach oben hin ein Fensterrahmen 2 anschließt. Bei dem Karosserieteil kann es sich um eine hintere Tür oder eine hintere Seitenwand des Kraftfahrzeuges handeln. Der Fensterrahmen 2 weist eine obere Karosseriestrebe 3, einen unteren Rahmenabschnitt 4 und eine vertikale B-Säule 5 auf. Der untere Rahmenabschnitt 4 bildet den oberen Abschluss des geschlossenen Wandabschnitts 1. Eine Führungsschiene 6 erstreckt sich vertikal zwischen dem unteren Rahmenabschnitt 4 und der Karosseriestrebe 3 und ist an diesen Bauteilen befestigt. Die Führungsschiene 6 teilt den Fensterrahmen 2 in zwei Bereiche 7, 8, wobei einer der Bereiche 7 zur Halterung einer feststehenden Scheibe und der andere der Bereiche 8 zur Aufnahme einer nicht dargestellten, in den Wandabschnitt 1 verschiebbar geführten Scheibe ausgebildet ist. An der Karosseriestrebe 3 ist die Führungsschiene 6 mittels eines in Figur 2 dargestellten Rastelementes 9 befestigt. Die Befestigung der Führungsschiene 6 an dem unteren Rahmenabschnitt 4 hat eine Schraubverbindung 10.

Figur 2 zeigt die Befestigung der Führungsschiene 6 an der Karosseriestrebe 3. Hierbei ist zu erkennen, dass das Rastelement 9 eine auf einem Hals 11 angeordnete radiale Verbreiterung 12 aufweist, welche die Karosseriestrebe 3 im Bereich einer Ausnehmung 13 hintergreift. Der Hals 11 des Rastelementes 9 ist über ein längliches Verbindungsstück 14 mit einem Schienenteil 15 der Führungsschiene 6 verrastet. Die Verrastung des Verbindungsstücks 14 mit dem Schienenteil 15 weist zwei mit Abstand zueinander angeordnete Rastbolzen 16 auf.

Figur 3 zeigt perspektivisch das Rastelement 9 der Verbindung der Führungsschiene 6 mit der Karosseriestrebe 3 aus Figur 2. Die radiale Verbreiterung 12, der Hals 11 und das längliche Verbindungsstück 14 sind einstückig aus Kunststoff gefertigt. Am Hals 11 hat das Rastelement 9 eine U-förmige Ausnehmung 17, die ein zumindest geringfügiges Federn der Außenflächen des Halses 11 ermöglicht. Die Rastbolzen 16 sind auf dem länglichen Verbindungsstück 14 angeordnet und weisen radial federnde Rasthaken 18 auf.

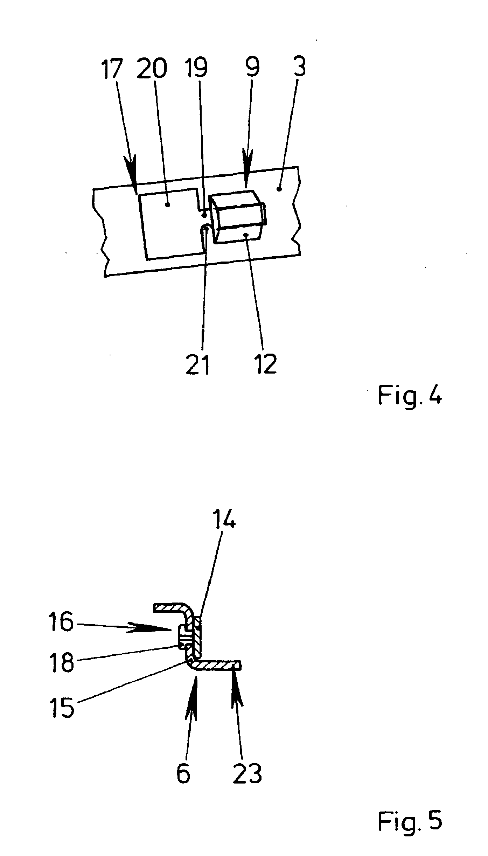

Figur 4 zeigt die Karosseriestrebe 3 im Bereich der Befestigung der Führungsschiene 6. Die radiale Verbreiterung 12 befindet sich oberhalb eines schmalen Abschnitts 19 der Ausnehmung 17 der Karosseriestrebe 3. Ein an den schmalen Abschnitt 19 angrenzender breiter Abschnitt 20 der Ausnehmung 17 dient zur Durchführung der radialen Verbreiterung 12 des Rasthakens 9 bei der Montage. Ein im schmalen Abschnitt 19 der Ausnehmung 17 nach innen weisender Haken 21 der Karosseriestrebe 3 hintergreift im montierten Zustand den Hals 11 des Rastelementes 9 und hält ihn in seiner dargestellten Lage.

Figur 5 zeigt eine Schnittdarstellung durch die Führungsschiene 6 im Bereich eines der Rastbolzen 16. Der Rastbolzen 16 durchdringt das Schienenteil 15 im Bereich einer Ausnehmung 22. Die radial federnden Rasthaken 18 hintergreifen das Schienenteil 15. Auf der den Rastbolzen 16 abgewandten Seite hat die Führungsschiene 6 eine Führung 23 für die in dem Wandabschnitt 1 aus Figur 1 verschiebbare Scheibe.

Zur Montage lässt sich die Führungsschiene 6 durch Zusammenfügen des Rasthakens 9 mit dem Schienenteil 15 zu einer vormontierbaren baulichen Einheit fertigen. Anschließend wird die vormontierte bauliche Einheit der Führungsschiene 6 in die Ausnehmung 13 der Karosseriestrebe 3 eingeführt und dort verrastet. Abschließend wird das untere Ende der Führungsschiene 6 mittels der Schraubverbindung 10 an dem unteren Rahmenabschnitt 4 verschraubt.

Die in den Figuren 3 und 5 dargestellte und vorstehend beschriebene Ausführungsform der Führungsschiene 6 liegt außerhalb der Erfindung.

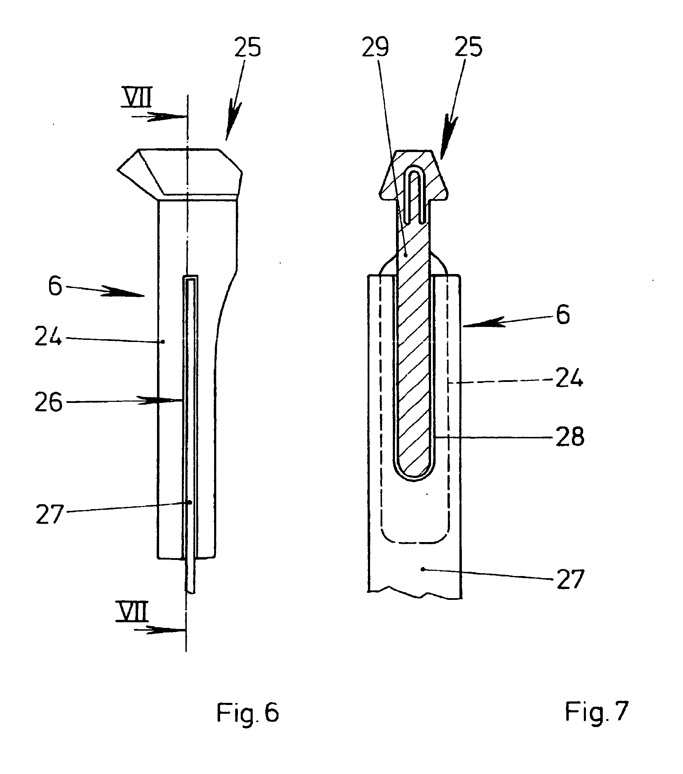

Figur 6 zeigt einen in der Karosseriestrebe 3 aus Figur 1 zu befestigenden Abschnitt einer zur Erfindung gehörenden Ausführungsform der Führungsschiene 6, bei der ein Verbindungsstück 24 eines Rastelementes 25 einen Schlitz 26 zur Aufnahme eines Schienenteils 27 hat.

Wie Figur 7 in einer Schnittdarstellung durch die Führungsschiene 6 aus Figur 6 entlang der Linie VII - VII zeigt, hat das Schienenteil 27 eine in Längsrichtung des Verbindungsstücks 24 weisende Ausnehmung 28. In die Ausnehmung 28 dringt ein Steg 29 des Verbindungsstücks 24 ein. Das Schienenteil 27 ist in dem Schlitz 26 eingeklemmt. Ansonsten ist die Führungsschiene 6 nach den Figuren 6 und 7 wie die aus den Figuren 1 bis 5 aufgebaut und lässt sich entsprechend montieren.

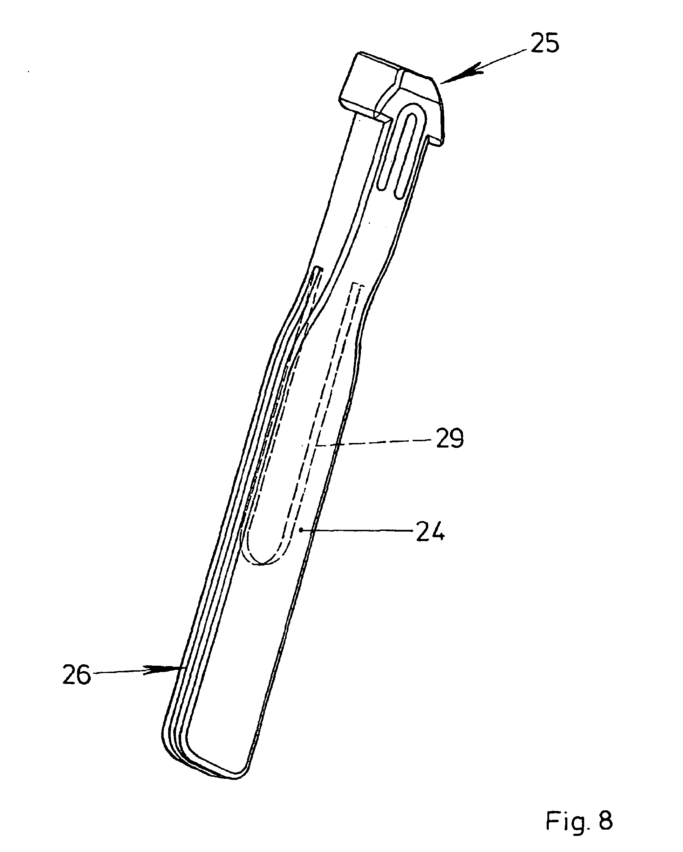

Figur 8 zeigt zur Verdeutlichung das Rastelement der Führungsschiene 6 aus den Figuren 6 und 7 in einer perspektivischen Darstellung.

### Bezugszeichenliste

- 1: Wandabschnitt
- 2: Fensterrahmen
- 3: Karosseriestrebe
- 4: Rahmenabschnitt
- 5: B-Säule

- 6: Führungsschiene
- 7, 8: Bereich
- 9: Rastelement
- 10: Schraubverbindung
- 11: Hals

- 12: Verbreiterung
- 13: Ausnehmung
- 14: Verbindungsstück
- 15: Schienenteil
- 16: Rastbolzen

- 17: Ausnehmung
- 18: Rasthaken
- 19, 20: Abschnitt
- 21: Haken
- 22: Ausnehmung

- 23: Führung
- 24: Verbindungsstück
- 25: Rastelement
- 26: Schlitz
- 27: Schienenteil

- 28: Ausnehmung
- 29: Steg

## Patentansprüche

1. Fensterrahmen (2) einer Karosserie eines Kraftfahrzeuges, aufweisend eine vertikale Führungsschiene (6) mit Befestigungsmitteln am oberen und unteren Rahmenabschnitt (4) des Fensterrahmens (2), welche ein Fenster in einen vorderen und einen hinteren Bereich (7, 8) aufteilt, wobei einer der Bereiche (7) zur Halterung einer nicht verschiebbaren Scheibe vorgesehen ist und in einer den oberen Rahmenabschnitt bildenden Karosseriestrebe (3) befestigt ist, wobei ein zur Halterung der nicht verschiebbaren Scheibe vorgesehenes Schienenteil (27) der Führungsschiene (6) mit einem Rastelement (25) eine vormontierbare bauliche Einheit bildet, in der das Rastelement (25) gegenüber dem Schienenteil (27) ausgerichtet und in seiner vorgesehenen Lage gehalten ist, und wobei das Rastelement (25) in der Karosseriestrebe verrastet ist, **dadurch gekennzeichnet, dass** das Rastelement (25) ein längliches Verbindungsstück (24) aufweist, das Verbindungsstück (24) mit dem Schienenteil (27) verbunden ist, das Schienenteil (27) eine in Längsrichtung des Verbindungsstücks (24) weisende Ausnehmung (28) aufweist, und das Verbindungsstück (24) einen in die Ausnehmung (28) eindringenden Steg (29) hat.

2. Fensterrahmen nach Anspruch 1, **dadurch gekennzeichnet, dass** die Verbindung des Verbindungsstücks (24) mit dem Schienenteil (27) als Klemmverbindung ausgebildet ist.

3. Fensterrahmen nach Anspruch 1 oder 2, **dadurch gekennzeichnet, dass** das Schienenteil (27) auf seiner der nicht verschiebbaren Scheibe abgewandten Seite eine Führung (13) für eine verschiebbare Scheibe aufweist.

4. Fensterrahmen nach einem der vorhergehenden Ansprüche, **dadurch gekennzeichnet, dass** das Rastelement (25) eine auf einem Hals (11) angeordnete, radiale Verbreiterung (12) zur Verrasterung in einer Ausnehmung (13) der Karosseriestrebe (3) aufweist, wobei die Ausnehmung (13) der Karosseriestrebe (3) einen der radialen Verbreiterung (12) entsprechenden breiten Abschnitt (20) und einen an dem breiten Abschnitt (20) anschließenden, dem Hals (11) des Rastelements (25) entsprechenden schmalen Abschnitt (19) hat.

5. Fensterrahmen nach einem der vorhergehenden Ansprüche, **dadurch gekennzeichnet, dass** der Hals (11) des Rastelementes (25) radial federnd gestaltet ist und dass der schmale Abschnitt (19) der Ausnehmung (13) der Karosseriestrebe (3) einen den Hals (11) des Rastelementes (25) hintergreifenden Haken (21) hat.

6. Fensterrahmen nach einem der vorhergehenden Ansprüche, **dadurch gekennzeichnet, dass** das Rastelement (25) und das Verbindungsstück (24) einstückig aus Kunststoff gefertigt ist.

7. Fensterrahmen nach einem der vorhergehenden Ansprüche, **dadurch gekennzeichnet, dass** der Hals (11) des Rastelementes (25) eine U-förmige Ausnehmung (17) aufweist.

8. Fensterrahmen nach einem der vorhergehenden Ansprüche, **dadurch gekennzeichnet, dass** das Verbindungsstück (24) einen Schlitz (26) zur Aufnahme eines Abschnitts des Schienenteils (27) hat.

9. Fensterrahmen nach einem der vorhergehenden Ansprüche, **dadurch gekennzeichnet, dass** das Schienenteil (27) in dem Verbindungsstück (24) eingeklemmt ist.

## Claims

1. A window frame (2) of a body of a motor vehicle, comprising a vertical guide rail (6) with fastening means on the upper and bottom frame section (4) of the window frame (2), which divides a window into a front and rear area (7, 8), wherein one of the areas (7) is provided for fixing a fixed pane and is fixed in a car body strut (3) forming the upper frame section, wherein a rail part (27) of the guide rail (6) provided for fixing the fixed pane forms a pre-mountable structural unit with a latching element (25), in which the latching element (25) is aligned in relation to the rail part (27) and is held in its intended position, and wherein the latching element (25) is latched in the car body strut, **characterized in that** the latching element (25) comprises an elongated connecting element (24), the connecting element (24) is connected to the rail part (27), the rail part (27) comprises a recess (28) facing in the longitudinal direction of the connecting element (24), and the connecting element (24) comprises a web (29) penetrating the connecting element (24).

2. A window frame according to claim 1, **characterized in that** the connection of the connecting element (24) to the rail part (27) is arranged as a clamping connection.

3. A window frame according to claim 1 or 2, **characterized in that** the rail part (27) comprises a guide (13) for a movable pane on its side facing away from the fixed pane.

4. A window frame according to one of the preceding claims, **characterized in that** the latching element (25) comprises a radial enlargement (12) arranged on a throat (11) for latching in a recess (13) of the car body strut (3), wherein the recess (13) of the car body strut (3) comprises a broad section (20) corresponding to the enlargement (12) and a narrow section (19) which corresponds to the throat (11) of the latching element (25) and is adjacent to the broad section (20).

5. A window frame according to one of the preceding claims, **characterized in that** the throat (11) of the latching element (25) is arranged in a radially resilient way, and that the narrow section (19) of the recess (13) of the car body strut (3) comprises a hook (21) engaging behind the throat (11) of the latching element (25).

6. A window frame according to one of the preceding claims, **characterized in that** the latching element (25) and the connecting element (24) are integrally made of plastic.

7. A window frame according to one of the preceding claims, **characterized in that** the throat (11) of the latching element (25) comprises a U-shaped recess (17).

8. A window frame according to one of the preceding claims, **characterized in that** the connecting element (24) comprises a slit (26) for accommodating a section of the rail part (27).

9. A window frame according to one of the preceding claims, **characterized in that** the rail part (27) is clamped in the connecting element (24).

## Revendications

1. Cadre de fenêtre (2) d'une carrosserie de véhicule à moteur, comprenant un rail de guidage vertical (6) avec des moyens de fixation dans la partie de cadre supérieure et inférieure (4) du cadre de fenêtre (2), qui partage une fenêtre en une zone avant et une zone arrière (7, 8), l'une de ces zones (7) étant prévue pour la fixation d'une vitre non coulissante et étant fixée dans un jambage de carrosserie (3) formant la partie de cadre supérieure, une partie de rail (27) du rail de guidage (6) prévue pour maintenir la vitre non coulissante formant avec un élément d'emboîtement (25) une unité de construction pré-assemblée dans laquelle l'élément d'emboîtement (25) est orienté par rapport à la partie de rail (27) et retenu dans sa position prévue, et l'élément d'emboîtement (25) étant emboîté dans le jambage de carrosserie, **caractérisé en ce que** l'élément d'emboîtement (25) présente une pièce d'assemblage (24) allongée, la pièce d'assemblage (24) est assemblée avec la partie de rail (27), la partie de rail (27) présente un évidement (28) orienté dans le sens longitudinal de la pièce d'assemblage (24) et la pièce d'assemblage (24) possède une barrette (29) qui pénètre dans l'évidement (28).

2. Cadre de fenêtre selon la revendication 1, **caractérisé en ce que** l'assemblage de la pièce d'assemblage (24) avec la partie de rail (27) est conçu comme un assemblage par serrage.

3. Cadre de fenêtre selon la revendication 1 ou 2, **caractérisé en ce que** la partie de rail (27) présente sur son côté orienté à l'opposé de la vitre non coulissante un guidage (13) pour une vitre coulissante.

4. Cadre de fenêtre selon l'une des revendications précédentes, **caractérisé en ce que** l'élément d'emboîtement (25) présente un élargissement radial (12) disposé sur un collet (11) pour l'emboîtement dans un évidement (13) du jambage de carrosserie (3), l'évidement (13) du jambage de carrosserie (3) comportant un segment large (20) correspondant à l'élargissement radial (12) et un segment étroit (19) faisant suite au segment large (20) et correspondant au collet (11) de l'élément d'emboîtement (25).

5. Cadre de fenêtre selon l'une des revendications précédentes, **caractérisé en ce que** le collet (11) de l'élément d'emboîtement (25) est élastique dans le sens radial et **en ce que** le segment étroit (19) de l'évidement (13) du jambage de carrosserie (3) possède un crochet (21) qui se met en prise derrière le collet (11) de l'élément d'emboîtement (25).

6. Cadre de fenêtre selon l'une des revendications précédentes, **caractérisé en ce que** l'élément d'emboîtement (25) et la pièce d'assemblage (24) sont fabriqués d'un seul tenant en matière plastique.

7. Cadre de fenêtre selon l'une des revendications précédentes, **caractérisé en ce que** le collet (11) de l'élément d'emboîtement (25) présente un évidement en forme de U (17).

8. Cadre de fenêtre selon l'une des revendications précédentes, **caractérisé en ce que** la pièce d'assemblage (24) possède une fente (26) pour recevoir un segment de la partie de rail (27).

9. Cadre de fenêtre selon l'une des revendications précédentes, **caractérisé en ce que** la partie de rail (27) est serrée dans la pièce d'assemblage (24).
